# EUROPEAN PATENT APPLICATION

(11) **EP 3 993 084 A1**
(43) Date of publication of application: **04.05.2022**
(21) Application number: 20833379.9
(22) Date of filing: 18.06.2020

(54) **RUBBER MOLDED BODY AND BATTERY PACK**

(30) Priority: 28.06.2019 JP 2019122157
(71) Applicant: Mitsubishi Materials Corporation, Tokyo 100-8117 (JP)
(72) Inventor: ASHIDA Keiko, Amagasaki-shi, Hyogo 660-0856 (JP); ZUSHI Toshihiro, Amagasaki-shi, Hyogo 660-0856 (JP)
(74) Representative: Ter Meer Steinmeister & Partner
(86) International application number: PCT/JP2020/023944
(87) International publication number: WO 2020/262187

(57) **Abstract**

A rubber molded body is provided that is attachable to an outer circumference of one or more lithium ion secondary battery cells each having a safety valve or an exhaust hole in a manner that the safety valve or the exhaust hole is at least covered with the rubber molded body. The rubber molded body is further characterized in that a thermal conductivity measured by a unidirectional heat flux stationary comparison method pursuant to JIS H7903: 2008 (measured at 33°C) is less than 1.0 W/m·K, a portion that covers the safety valve or the exhaust hole has a thickness greater than or equal to 0.3 mm and less than-or equal to 10.0 mm, and a surface hardness measured with a type A durometer pursuant to JIS K6253 is greater than or equal to 50 and less than or equal to 90.

## Description

### TECHNICAL FIELD

The present invention relates to a rubber molded body produced by molding and curing a rubber composition, and a battery pack including a lithium ion secondary battery cell to which the rubber molded body has been attached.

### BACKGROUND ART

There is an increasing demand in recent years for lithium ion secondary batteries (may be hereinafter simply referred to as "battery" or "batteries"). In certain applications of use, however, the lithium ion secondary batteries, as they are further reduced in size and increased in energy density (energy density of 300 Wh/kg or more), may involve a higher risk of heat generation at very high temperatures. Such a risk is posing a growing need for safety measures with the batteries and battery packs containing the batteries.

For example, the lithium ion secondary batteries may involve the risk of thermal runaway if they are overly charged or discharged or internally or externally short-circuited under certain undesired impacts. The lithium ion secondary battery in the thermal runaway may start to generate gas and increase its internal pressure, which may possibly lead to breakage or rupture of the battery's exterior can. To avoid such an event, the battery of this type may conventionally have an exhaust hole and/or a safety valve for gas drainage.

The thermal runaway, if occurs, may cause the overheated battery to ignite and burn. To eliminate the risks of fire spreading and resulting fire damage, the patent document 1 describes the idea of coating the surface of a battery with a flameproof sheet.

In the lithium ion secondary battery in thermal runaway, the exhaust hole and/or the safety valve may invite the blowout of high-temperature and high-pressure gas. The non-patent document 1 says that the gas thus blowing out of the battery may momentarily reach even higher temperatures than 999°C.

The flameproof sheet described in the patent document 1 is for protection against flames resulting from such a high-temperature gas (flame-preventive measure).

### CITATION LIST

### PATENT DOCUMENT

Patent document 1 : JP 2019-032923 A

Non-patent document 1: National Traffic Safety and Environment Laboratory, Forum Lecture, 2012, Page 135 - 138, Hideki Matsumura, Kazuo Matsushima

### SUMMARY OF INVENTION

### TECHNICAL PROBLEM

Increasingly higher energy densities of the batteries, which is a notable trend in recent years, have led to dramatically higher pressures of the gas emitted as a result of the thermal runaway. Even the flameproof sheet described in the patent document 1 may be torn or damaged under such high gas pressures. In case the flameproof sheet described in the patent document 1 is made of fiber materials, for example, pores of the fiber mesh may be broadened under high gas pressures. In the case of a resin-made flameproof sheet, the resin is softened even before the sheet starts to burn and soon becomes too weak to withstand high gas pressures, finally melting off the sheet. In either case, through holes may be likely to form, and any material other than the sheet (for example, exterior case containing the battery) may be broken or burnt down by high-temperature and high-pressure gas blowing out through the holes in the sheet, and a device or a vehicle loaded with the battery may be eventually broken or burnt down.

Possibly, air (oxygen) supplied through the holes in the sheet may cause the lithium ion secondary battery per se to burn and further spread flames. This may lead to breakage of the battery and may further lead to thermal runaway of adjacent batteries in normal condition.

To address these issues of the known art, the present invention is directed to providing a rubber molded body that prevents fire spreading and fire damage in case high-temperature and high-pressure gas blows out through an exhaust hole and a safety valve of a lithium ion secondary battery as a result of thermal runaway of the battery, and a battery pack containing a lithium ion secondary battery cell to which the rubber molded body has been attached.

### TECHNICAL SOLUTION

To this end, the present invention provides the technical features described below.
1] A rubber molded body according to the present invention is attachable to an outer circumference of one or more lithium ion secondary battery cells each having a safety valve or an exhaust hole in a manner that the safety valve or the exhaust hole is at least covered with the rubber molded body. The rubber molded body is further characterized in that a thermal conductivity measured by a unidirectional heat flux stationary comparison method pursuant to JIS H7903: 2008 (measured at 33°C) is less than 1.0 W/m·K, a portion that covers the safety valve or the exhaust hole has a thickness greater than or equal to 0.3 mm and less than or equal to 10.0 mm, and a surface hardness measured with a type A durometer pursuant to JIS K6253 is greater than or equal to 50 and less than or equal to 90.
   The present invention provides a rubber molded body having thermal conductivity, a thickness and a surface hardness, values of which respectively stay within predetermined numerical ranges. This rubber molded body is attached to a lithium ion secondary battery cell so as to cover the safety valve or the exhaust hole of the battery cell. In case the lithium ion secondary battery undergoes thermal runaway, the rubber molded body thus characterized may prevent the formation of through holes which are likely to form when exposed to high-temperature and high-pressure gas blowing out through the safety valve or the exhaust hole. This may eliminate the risks of fire spreading and fire damage caused by the blowout of high-temperature and high-pressure gas.
2] A rubber molded body according to the present invention is attachable to an outer circumference of one or more lithium ion secondary battery cells each having a safety valve or an exhaust hole in a manner that the safety valve or the exhaust hole is at least covered with the rubber molded body. The rubber molded body is producible by molding and curing a silicone rubber composition including, relative to 100 parts by mass of organopolysiloxane, silica powder in an amount greater than or equal to 10 parts by mass and less than or equal to 100 parts by mass, layered silicates in an amount greater than or equal to 10 parts by mass and less than or equal to 50 parts by mass, titanium oxide in an amount greater than or equal to 0.5 parts by mass and less than or equal to 20 parts by mass, and a curing agent in an amount greater than or equal to 4.0 parts by mass and less than or equal to 14.0 parts by mass.
   According to the present invention, the rubber molded body is produced by molding and curing the silicone rubber composition including the before-mentioned substances combined together at the predetermined compounding ratios and is attached to the lithium ion secondary battery cell so as to cover the safety valve or the exhaust hole of the battery cell. In case the lithium ion secondary battery undergoes thermal runaway, the rubber molded body thus characterized may prevent the formation of through holes which are likely to form when exposed to high-temperature and high-pressure gas blowing out through the safety valve or the exhaust hole. This may eliminate the risks of fire spreading and fire damage caused by the blowout of high-temperature and high-pressure gas.
3] A rubber molded body according to the present invention is attachable to an outer circumference of one or more lithium ion secondary battery cells each having a safety valve or an exhaust hole in a manner that the safety valve or the exhaust hole is at least covered with the rubber molded body. The rubber molded body is producible by molding and curing a silicone rubber composition including, relative to 100 parts by mass of organopolysiloxane, silica powder in an amount greater than or equal to 10 parts by mass and less than or equal to 100 parts by mass, layered silicates in an amount greater than or equal to 10 parts by mass and less than or equal to 50 parts by mass, titanium oxide in an amount greater than or equal to 0.5 parts by mass and less than or equal to 20 parts by mass, and a curing agent in an amount greater than or equal to 4.0 parts by mass and less than or equal to 14.0 parts by mass. The rubber molded body is further characterized in that a thermal conductivity measured by a unidirectional heat flux stationary comparison method pursuant to JIS H7903: 2008 (measured at 33°C) is less than 1.0 W/m·K, a portion that covers the safety valve or the exhaust hole has a thickness greater than or equal to 0.3 mm and less than or equal to 10.0 mm, and a surface hardness measured with a type A durometer pursuant to JIS K6253 is greater than or equal to 50 and less than or equal to 90.
   According to the present invention, the rubber molded body is produced by molding and curing the silicone rubber composition including the before-mentioned substances combined together at the predetermined compounding ratios. The rubber molded body has thermal conductivity, a thickness and a surface hardness, values of which respectively stay within certain numerical ranges and is attached to the lithium ion secondary battery cell. In case the lithium ion secondary battery undergoes thermal runaway, the rubber molded body thus characterized may prevent the formation of through holes which are likely to form when exposed to high-temperature and high-pressure gas blowing out through the safety valve or the exhaust hole. This may eliminate the risks of fire spreading and fire damage caused by the blowout of high-temperature and high-pressure gas.
4] In a preferred embodiment of the present invention, the rubber molded body may have an elongation at break greater than or equal to 80% and less than or equal to 500%.
   According to this embodiment, at the time of being attached to the lithium ion secondary battery cell, the rubber molded body may be readily tensioned to closely contact the safety valve or the exhaust hole of the battery cell, and the portion of the rubber molded body covering these valve and hole may be allowed to keep a certain thickness.
5] In another embodiment of the present invention, the rubber molded body may have a shape in the form of a sheet, a tape, or a cap.
   According to this embodiment, the rubber molded body, when attached to the outer circumference so as to cover the safety valve or the exhaust hole, may be suitably attachable depending on the shape of the molded body.
6] A battery pack according to the present invention contains one or more lithium ion secondary battery cells in which the rubber molded body described in one of 1] to 5] is attached to an outer circumference thereof.
   According to the present invention, the rubber molded body is attached to the outer circumference of the lithium ion secondary battery cell(s) in a manner that the safety valve or the exhaust hole of the battery cell is covered with the rubber molded body. In case the lithium ion secondary battery undergoes thermal runaway, the rubber molded body thus characterized may prevent the formation of through holes which are likely to form when exposed to high-temperature and high-pressure gas blowing out through the safety valve or the exhaust hole. This may eliminate the risks of fire spreading and fire damage to the battery pack caused by the blowout of high-temperature and high-pressure gas.
7] In a preferred embodiment of the present invention, an outer circumferential surface of the lithium ion secondary battery cell may be at least partly coated with a composition prepared in the form of a putty having thermal conductivity.
   Preferably, the composition prepared in the form of a putty may have a thermal conductivity (W/m·K) greater than or equal to 1.5 and less than or equal to 16.0.

According to this embodiment, the outer circumferential surface of the lithium ion secondary battery cell is at least partly coated with the putty-like composition having thermal conductivity. In case the lithium ion secondary battery cell undergoing thermal runaway starts to generate heat, the generated heat may be efficiently radiated out of the battery cell, so that undesired overheat of the lithium ion secondary battery cell may be controllable.

### ADVANTAGEOUS EFFECTS

According to the present invention described herein, the rubber molded body is attached to the lithium ion secondary battery cell in a manner that the safety valve or the exhaust hole of the battery cell is covered with the molded body. In case the lithium ion secondary battery undergoes thermal runaway, the rubber molded body may prevent the formation of through holes which are likely to form when exposed to high-temperature and high-pressure gas blowing out through the safety valve or the exhaust hole. This may eliminate the risks of fire spreading and fire damage caused by the blowout of high-temperature and high-pressure gas.

### BRIEF DESCRIPTION OF DRAWINGS

Fig. 1 is a perspective view of a lithium ion secondary battery cell to which a rubber molded body according to an embodiment of the present invention is attachable.
Fig. 2 is a perspective view of a rubber molded body and a lithium ion secondary battery cell according to an embodiment of the present invention.
Fig. 3 is a perspective view of the lithium ion secondary battery cell to which the rubber molded body illustrated in Fig. 2 has been attached.
Fig. 4 is a view in A-A cross section of what is illustrated in Fig. 3.
Fig. 5 is a perspective view according to another embodiment of the present invention illustrated correspondingly to Fig. 3.
Fig. 6 is a perspective view according to yet another embodiment of the present invention illustrated correspondingly to Fig. 3.
Fig. 7 is a view in B-B cross section of what is illustrated in Fig. 6.
Fig. 8 is a perspective view according to yet another embodiment of the present invention illustrated correspondingly to Fig. 2.
Fig. 9 is a perspective view of the lithium ion secondary battery cell to which the rubber molded body illustrated in Fig. 8 has been attached.
Fig. 10 is a schematic drawing of a battery pack according to an embodiment of the present invention.

### DESCRIPTION OF EMBODIMENTS

Embodiments of the present invention are hereinafter described in detail.

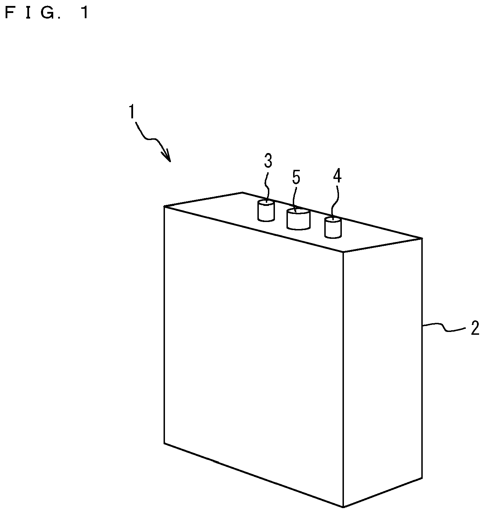

Fig. 1 is a perspective view of a lithium ion secondary battery cell to which a rubber molded body according to an embodiment of the present invention is attachable.

A lithium ion secondary battery cell 1 illustrated in this drawing is an angular battery cell. On an upper surface of an exterior can 2; battery container, are provided a positive electrode terminal 3, a negative electrode terminal 4, and a safety valve 5 disposed between the positive and negative terminals.

The safety valve 5 is driven to operate once the internal pressure of the lithium ion secondary battery cell 1 starts to increase in response to the occurrence of thermal runaway. With this safety valve, high-temperature and high-pressure gas may be prevented from blowing out of the battery cell, and rupture or breakage of the exterior can 2 possibly caused by the gas may be successfully avoided.

The thermal runaway, if occurs with the lithium ion secondary battery cell 1, may cause the battery to overheat and burn. The high-temperature and high-pressure gas, once it blows out of the battery cell through the safety valve 5, may possibly spread extensively at a dash, in which case fire spreading and fire damage may be very difficult to control.

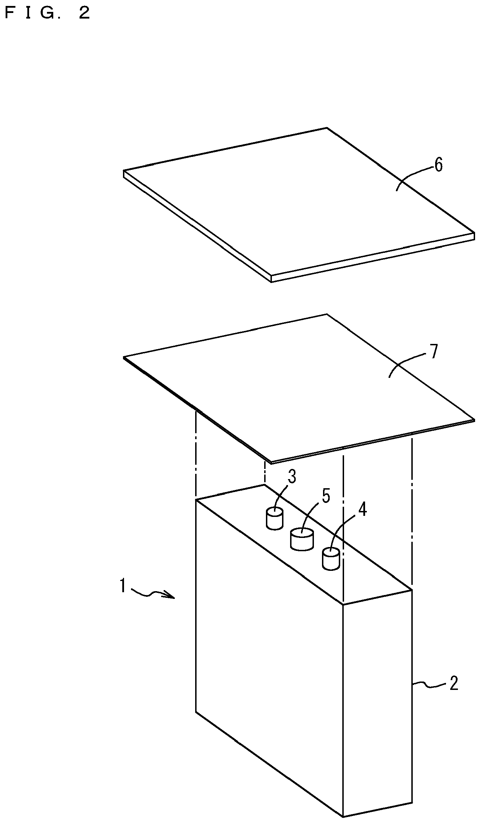

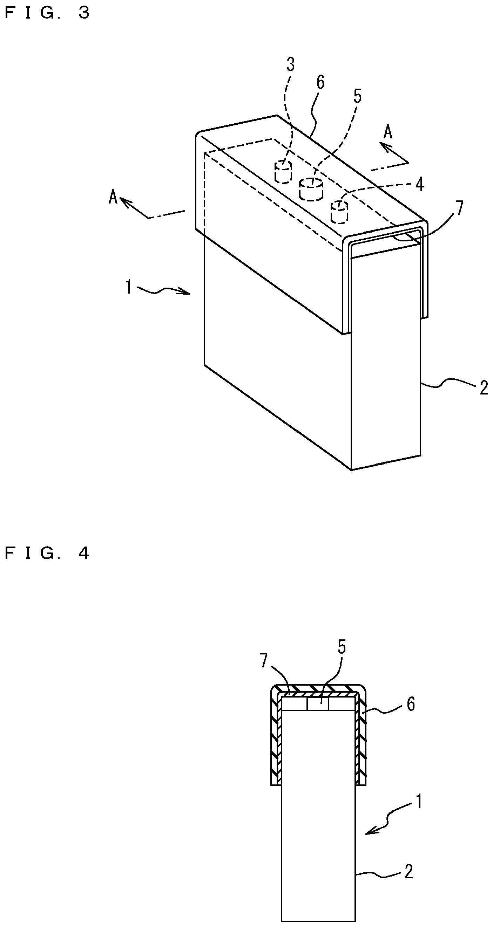

Referring to Figs. 2 and 3, and also Fig. 4 which is a cross-sectional view along A-A line of Fig. 3, the rubber molded body 6 in this embodiment has plasticity and is shaped in the form of a sheet. This rubber molded body 6 is attached to an outer circumference of the lithium ion secondary battery cell 1 with an insulating sheet 7 being interposed therebetween in a manner that the safety valve 5 is at least covered with the molded body.

In this embodiment, the insulating sheet 7 and the sheet-like rubber molded body 6 are both rectangular and are substantially equally sized. The insulating sheet 7 and the rubber molded body 6 are attached to the lithium ion secondary battery cell 1 so as to cover an upper surface with the safety valve 5 and the upper parts of front and back surfaces (lateral surfaces on the right and left sides on Fig. 4) of the battery cell 1.

Lead wires, though not illustrated in the drawings, are connected to the positive electrode terminal 3 and to the negative electrode terminal 4 of the lithium ion secondary battery cell 1 and are extracted through the other lateral surfaces of the battery cell uncovered with the insulating sheet 7 and the rubber molded body 6.

The lithium ion secondary battery cell 1, after the insulating sheet 7 and the sheet-like rubber molded body 6 are attached thereto, is placed and housed in a exterior case not illustrated in the drawings. The rubber molded body 6 covering upper parts of the front and back surfaces of the lithium ion secondary battery cell 1 is pressed against the inner wall surface of the exterior case and is thereby retainable in the case.

The rubber molded body 6 according to this embodiment is obtained by molding and curing a rubber composition described later. The rubber molded body 6 has a thermal conductivity less than 1.0 W/m·K when measured by a unidirectional heat flux stationary comparison method (SCHF) pursuant to JIS H7903: 2008 (measured at 33°C).

In case the thermal conductivity of the rubber molded body is greater than or equal to 1.0 W/m·K, high-temperature and high-pressure gas blowing out through the safety valve or the exhaust hole may invite the conduction of heat through the rubber molded body 6 toward members on the outer circumference of the molded body. For example, heat may be conducted to the exterior can containing the lithium ion secondary battery cell 1 covered with the sheet-like rubber molded body 6, and the exterior can may be melted and deformed under heat.

While the thermal conductivity is preferably lower, its lower limit value may be, for example, 0.1 W/m·K.

Referring to a portion of the sheet-like rubber molded body 6 that covers the safety valve 5, the rubber molded body 6 in this embodiment is shaped in the form of a sheet uniform in thickness. The thickness of the sheet-like rubber molded body 6 may preferably be greater than or equal to 0.3 mm and less than or equal to 10.0 mm. The thickness of this molded body may desirably be greater than or equal to 0.5 mm and less than or equal to 5 mm or may more desirably be greater than or equal to 0.7 mm and less than or equal to 2 mm.

In the rubber molded body 6 having a thickness less than 0.3 mm, through holes may be likely to form when exposed to high-temperature and high-pressure gas blowing out through the safety valve 5. Then, the high-temperature and high-pressure gas may be guided to blow out through these holes, which may lead to fire spreading and fire damage to the members on the outer side of the lithium ion secondary battery cell 1 covered with the insulating sheet 7 and the sheet-like rubber molded body 6. These through holes may also guide the passage of air (oxygen), possibly accelerating fire spreading and fire damage to the lithium ion secondary battery cell 1 covered with the insulating sheet 7 and the sheet-like rubber molded body 6.

The rubber molded body 6 having a thickness greater than 10.0 mm may successfully block high-temperature and high-pressure gas, meaning that the formation of though holes may be unlikely. On the other hand, the rubber molded body 6 thus thick may certainly increase in size, requiring a complicated molding process, and may be too large for a regular exterior can; container of the lithium ion secondary battery cell 1.

The rubber molded body 6 may preferably have a surface hardness greater than or equal to 50 and less than or equal to 90 when measured with a type A durometer pursuant to JIS K6253. In the case of the rubber molded body 6 having a surface hardness less than 50, breakage of the rubber molded body 6 may be more likely to occur and/or the formation of through holes in the molded body may be unavoidable under the impact of high-temperature and high-pressure gas blowing out through the safety valve 5 (mostly owing to the pressure (force) of blowout gas) The rubber molded body 6 having a surface hardness greater than 90 may become weaker and more easily break when the sheet-like molded body is attached with a certain curvature to the lithium ion secondary battery cell 1 or when the molded body is subject to any undesired impact of, for example, high-temperature and high-pressure gas blowing out through the safety valve 5.

The rubber molded body 6 may be obtained by molding and curing any other suitable rubber composition but the rubber composition described later. Unlike any resin-molded materials, the rubber molded body 6 made of a suitable rubber-containing material may be unlikely to melt off or may be unlikely to have through holes under the impact of high-temperature and high-pressure gas.

The rubber molded body 6 according to this embodiment is produced by molding and curing a rubber composition primarily consisting of a silicone rubber composition.

The silicone rubber composition suitably used to produce the rubber molded body 6 may include, relative to 100 parts by mass of organopolysiloxane, silica powder in an amount greater than or equal to 10 parts by mass and less than or equal to 100 parts by mass, layered silicates in an amount greater than or equal to 10 parts by mass and less than or equal to 50 parts by mass, titanium oxide in an amount greater than or equal to 0.5 parts by mass and less than or equal to 20 parts by mass, and a curing agent in an amount greater than or equal to 4.0 parts by mass and less than or equal to 14.0 parts by mass.

Examples of the organopolysiloxane to be added may include substances expressed by the average unit formula: RaSiO (4-a)/2 (where "R" is a hydrocarbon group or a halogenated alkyl group, and "a" is greater than or equal to 1.95 and less than or equal to 2.05). Examples of the hydrocarbon group, "R", may include: alkyl groups including methyl group, ethyl group and propyl group; alkenyl groups including vinyl group and aryl group; cycloalkyl groups including cyclohexyl group; aralkyl groups including β-phenylethyl group; and aryl groups including phenyl group and tolyl group. Examples of the halogenated group, "R", may include 3,3,3-trifluoropropyl group and 3-chloropropyl group. The organopolysiloxane may preferably have an alkenyl group bonded to at least two silicon atoms in a molecule in case molecules are cross linked by a curing agent; an organic peroxide and/or a platinum-based catalyst, at the position of a hydrogen atom bonded to a silicon atom in the molecule. Examples of the alkenyl group may include vinyl group, aryl group. propenyl group and hexenyl group. The molecules of the organopolysiloxane may be either straight chained or branch chained.

Examples of the silica powder may include dry process silica such as fumed silica, and wet process silica such as deposited silica. The silica powder may preferably be further characterized in that the surface of the dry process silica or the wet process silica is hydrophobized with an organochlorosilane, organoalkoxysilane, hexaorganodisilazane, or organosiloxane oligomer. The silica powder may preferably include one or two or more of the exemplified silicas. It may be particularly preferable for the silica powder to include the hydrophobized dry process silica, because an improved degree of sintering may prevent the formation of through holes in the rubber molded body under the impact of high-temperature and high-pressure gas if such gas blows out through the safety valve as a result of thermal runaway of the lithium ion secondary battery.

The specific surface area of the silica powder measured by a multipoint nitrogen adsorption (BET) pursuant to JIS K6430:2008 may preferably be greater than or equal to 50 m²/g. The primary median diameter of the silica powder measured with a laser diffraction/ scattering particle size distribution analyzer may preferably be greater than or equal to 1 pm and less than or equal to 10 µm. In view of fire resistance, the silicone rubber composition may preferably include, relative to 100 parts by mass of the organopolysiloxane, silica powder in an amount greater than or equal to 10 parts by mass and less than or equal to 100 parts by mass. The silicone rubber composition including less than 10 parts by mass of the silica powder may increase the risk of through holes being formed in the rubber molded body under the impact of high-temperature and high-pressure gas blowing out through the safety valve 5. On the other hand, the silicone rubber composition including more than 100 parts by mass of the silica powder may increase the surface hardness of the rubber molded body 6, undermining its strength.

Examples of the layered silicate may include mica, montmorillonite, smectite, illite, sepiolite, allelevaldite, amesite, hectorite, talc, fluorohectorite, saponite, beidellite, nontronite, stevensite, bentonite, vermiculite, fluorovermiculite, and halloysite. The layered silicate may preferably include one or two or more of the examples. As the layered silicate, one or two or more of these examples may preferably be used. A particularly preferable example of the layered silicate may be mica because an improved degree of sintering may provide a better retainability of the lithium ion secondary battery. Examples of the mica may include muscovite, biotite and phlogopite. The median diameter of the layered silicate measured with a laser diffraction/scattering particle size distribution analyzer may preferably be greater than or equal to 1 pm and less than or equal to 100 pm. The median diameter of the layered silicate may preferably be greater than the primary median diameter of the silica powder. In view of fire resistance, the silicone rubber composition may preferably include, relative to 100 parts by mass of the organopolysiloxane, 10 to 150 parts by mass of the layered silicate because an improved degree of sintering may prevent the formation of through holes in the rubber molded body under the impact of high-temperature and high-pressure gas if such gas blows out through the safety valve as a result of thermal runaway of the lithium ion secondary battery.

To allow the rubber molded body 6 to maintain its shape (during/after exposure to high temperatures), the content of the layered silicate in the silicone rubber composition may preferably be greater than that of the silica powder.

The silicone rubber composition may contain titanium oxide to improve heat resistance. The silicone rubber composition may include, relative to 100 parts by mass of the organopolysiloxane, the titanium oxide in an amount greater than or equal to 0.5 parts by mass and less than or equal to 20 parts by mass, or preferably in an amount greater than or equal to 1.0 parts by mass and less than or equal to 10.0 parts by mass. Contents of the titanium oxide less than 0.5 parts by mass may result in insufficient heat resistance, while contents of the titanium oxide greater than 20.0 parts by mass may result in poor fire retardancy of the rubber molded body 6.

Instead of or in combination with the titanium oxide, a metal oxide(s) may be used, examples of which may include iron oxide, silica, or zinc oxide. Other examples of the heat resistance improver may include graphite and aluminum, one or more of which may be used in combination with the metallic oxide.

The silicone rubber composition may need to be cured to an extent that a desired degree of hardness can be reached. The silicone rubber composition may include, relative to 100 parts by mass of the organopolysiloxane, a curing agent in an amount greater than or equal to 4.0 parts by mass and less than or equal to 14.0 parts by mass. Contents of the curing agent less than 4.0 parts by mass may fail to promise a sufficient degree of surface hardness of the rubber molded body 6, possibly increasing the risk of breakage of the molded body when attached to the outer circumference of the lithium ion secondary battery cell 1. On the other hand, contents of the curing agent greater than 14.0 parts by mass may compromise an expected strength of the rubber molded body 6.

Suitable examples of the curing agent may include organic peroxides and platinum-based catalysts.

The rubber molded body 6 may be producible by any suitable known production method.

For example, the materials described thus far may be mixed and kneaded and then molded by extrusion molding into the form of a sheet having a desired thickness. Then, the sheet-like materials may be subjected to a primary vulcanizing process (for 10 minutes at 120°C) and a secondary vulcanizing process (for 4 hours at 200°C) and then cut in a predetermined width into pieces of a tape. Otherwise, the sheet-like material may be formed by injection molding or press molding into a desired shape and vulcanized in the primary and secondary processes and then cured.

The elongation at break of the rubber molded body 6 may preferably be greater than or equal to 80% and less than or equal to 500%, because values of the elongation in these numerical ranges may allow the molded body to be easily attached, under a tensile force being applied thereto, to the outer circumference of the lithium ion secondary battery cell 1 so as to cover the safety valve 5. More desirably, the elongation at break of the rubber molded body 6 may be greater than or equal to 100% and less than or equal to 350%.

If the elongation at break is less than 80%, the risk of breakage of the rubber molded body 6 may increase when it is attached to the battery cell so as to cover the safety valve 5. On the other hand, if the elongation at break is greater than 500%, the rubber molded body 6 may become too thin, as a result of which through holes may be more likely to form when exposed to high-temperature and high-pressure gas.

In this embodiment, the rubber molded body 6 is attached to the lithium ion secondary battery cell 1 in a manner that the safety valve 5 is covered with the molded body. In case the lithium ion secondary battery cell 1 undergoes thermal runaway, the rubber molded body 6 characterized as described thus far may prevent the formation of through holes which are likely to form when exposed to high-temperature and high-pressure gas blowing out through the safety valve 5. This may eliminate the risks of fire spreading and fire damage caused by the blowout of high-temperature and high-pressure gas.

In this embodiment, the insulating sheet 7 and the rubber molded body 6 are attached to the lithium ion secondary battery cell 1 in a manner that the upper surface and upper parts of the front and back surfaces of the battery cell are covered with these sheet and molded body. When the lithium ion secondary battery cell 1 is housed in the exterior can 2, the rubber molded body 6 covering the upper and back surfaces of the battery cell may be pushed against the inner wall surface of the exterior case and thereby retainable in the can.

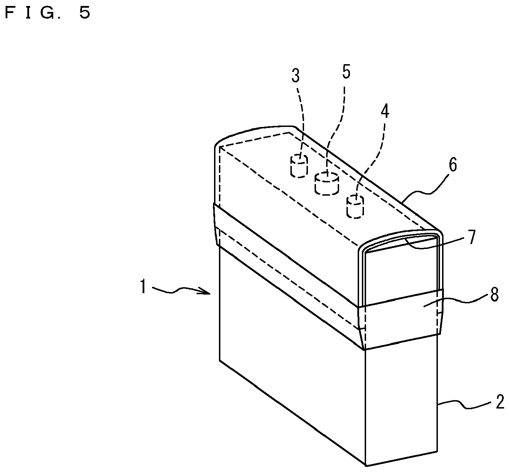

In another embodiment of the present invention, the rubber molded body 6 may be fixed to the exterior can 2 of the lithium ion secondary battery cell 1 with an adhesive tape 8, as in Fig. 5 illustrated correspondingly to Fig. 3. In the example illustrated in Fig. 5, the adhesive tape 8 is wound around and adhered to the exterior case 10 and ends on the front- and back-surface sides of the sheet-like rubber molded body 6 covering the battery cell 1. The rubber molded body 6 is thus fixed to the lithium ion secondary battery cell 1.

This may control possible displacement of the insulating sheet 7 and the rubber molded body 6 covering the lithium ion secondary battery cell 1.

Further advantageously, the insulating sheet 7 and the rubber molded body 6 may be fixed, with the adhesive tape 8, to the lithium ion secondary battery cell 1 under a tensile force being applied so as to reduce an interval between the insulating sheet 7 and the upper surface of the lithium ion secondary batter cell 1.

The high-temperature and high-pressure gas, once it blows out of the battery cell through the safety valve 5, may possibly spread extensively and quickly at a dash. However, such fast-spreading gas may be effectively controlled by the insulating sheet 7 and the rubber molded body 6 thus allowed to closely attach to the safety valve 5 on the upper surface of the lithium ion secondary battery cell 1.

In case the high-pressure gas dashes out of the battery through the safety valve 5, the rubber molding body 6 having rubber elasticity may be allowed to expand and accordingly reduce the gas pressure.

The adhesive tape 8 may be selected from adhesive-coated polyimide films, for example, films coated with acrylic adhesives or silicone-based adhesives. In view of heat resistance, the adhesive tape 8 may preferably be a polyimide film coated with a silicone-based adhesive.

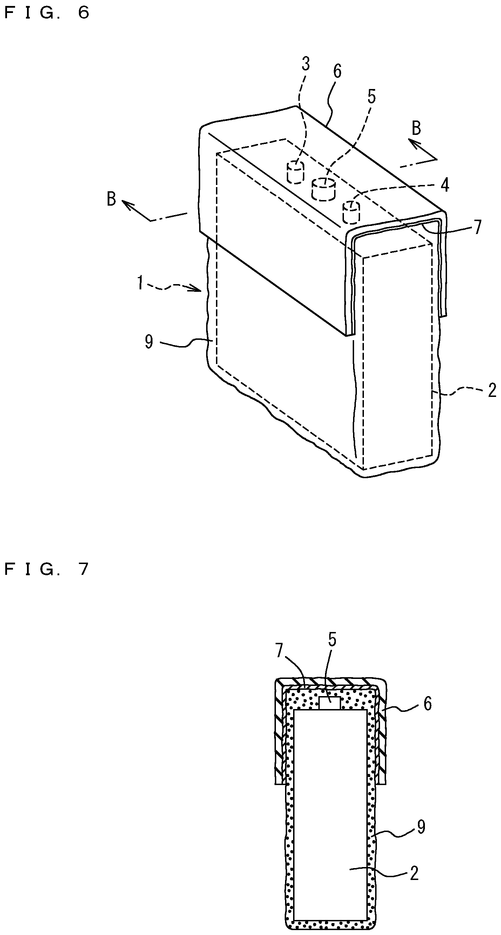

Fig. 6 is a perspective view according to yet another embodiment of the present invention, illustrated correspondingly to Fig. 3. Fig. 7 is a view in B-B cross section of what is illustrated in Fig. 6.

In this embodiment, the whole outer circumferential surface of the lithium ion secondary battery cell 1 is covered with a composition 9 prepared in the form of a putty that excels in thermal conductivity.

The insulating sheet 7 and the sheet-like rubber molded body 6 are attached to the lithium ion secondary battery cell 1 with the putty-like composition 9 being interposed therebetween so as to cover the upper surface, an upper part of the front surface, and a lower part of the back surface of the battery cell 1.

By thus having the outer circumferential surface of the lithium ion secondary battery cell 1 coated with the putty-like composition 9 that excels in thermal conductivity, heat generated by the lithium ion secondary battery cell 1 undergoing thermal runaway may be efficiently conducted and radiated out of the battery cell 1, which may conduce to a uniform overall heat distribution.

The putty-like composition 9 may be applied to the coating target; lithium ion secondary battery cell 1, in a manner that the surface profile of the battery cell 1 is followable. This may ensure a sufficiently large area of contact between the composition and heat source; lithium ion secondary battery cell 1, leading to a remarkable improvement of the heat releasability.

The putty-like composition 9 may preferably be applied to the coating target in a thickness greater than or equal to 2 mm and less than or equal to 5 mm.

The coating area of the putty-like composition 9 may be the whole or a part of the outer circumferential surface of the lithium ion secondary battery cell 1. The coating area may preferably be immediately above the safety valve 5 of the lithium ion secondary battery cell 1.

Specifically, the putty-like composition 9 that excels in thermal conductivity and the rubber molded body 6 are stacked in layers immediately above the safety valve 5 of the lithium ion secondary battery cell 1.

The compositions described in 1] and 2] are suitable examples of the putty-like composition 9 that excels in thermal conductivity.

1] A composition including a liquid polymer, aluminum hydroxide and bentonite, specifically including, relative to 100 parts by mass of the liquid polymer, 150 to 1000 parts by mass of the aluminum hydroxide and 5 to 20 parts by mass of the bentonite.
2] A composition having thermal conductivity in the form of a putty, including a base polymer primarily consisting of a liquid polymer having hydroxy groups and a thermally conductive filler, specifically including, relative to 100 parts by mass of the base polymer, 500 to 3000 parts by mass of the thermally conductive filler.

In this description, "in the form of a putty" and "putty-like" refer to a material, a needle penetration depth measured pursuant to JIS A5752:1994 (measured at 23±3°C) is greater than or equal to 50 mm and less than or equal to 160 mm.

The "liquid polymer" refers to a polymer in a liquified state at normal temperature and at normal pressure (25°C, 1 atmospheric pressure). Examples of the liquid polymer may include: liquid polyolefins, for example, liquid polybutadiene, liquid polyisoprene, liquid polybutene and liquid ethylene propylene copolymers; liquid silicones; liquid acryls; and liquid urethanes. The liquid polymer may preferably be selected from one or two or more of these examples, and a particularly preferable example of the liquid polymer may be the liquid polyolefin(s). To prevent the emission of a halogen gas that occurs during combustion, the liquid polymer may preferably include no halogen atom in molecules.

The putty-like composition that excels in thermal conductivity in 1] may preferably have:
A] a thermal conductivity (W/m·K) greater than or equal to 1.5 and less than or equal to 3.5; and
B] a consistency (needle penetration depth: mm) greater than or equal to 50 and less than or equal to 110.

The putty-like composition that excels in thermal conductivity in 2] may preferably have:
A] a thermal conductivity (W/m·K) greater than or equal to 5.0 and less than or equal to 16.0; and
B] a consistency (needle penetration depth: mm) greater than or equal to 60 and less than or equal to 160.

The heat releasability in consideration of how exactly the shape is followable, A] × B], in the compositions 1] and 2] may be:
1] greater than or equal to 150 and less than or equal to 314; and
2] greater than or equal to 390 and less than or equal to 1036.

A reason why the composition 2] is superior in heat releasability to the composition 1] is assumed to be the presence of hydroxy groups.

While the present invention is applied to one lithium ion secondary battery cell 1 in the embodiments described thus far, it should be understood that the technology described herein be applicable likewise to two or more lithium ion secondary battery cells 1.

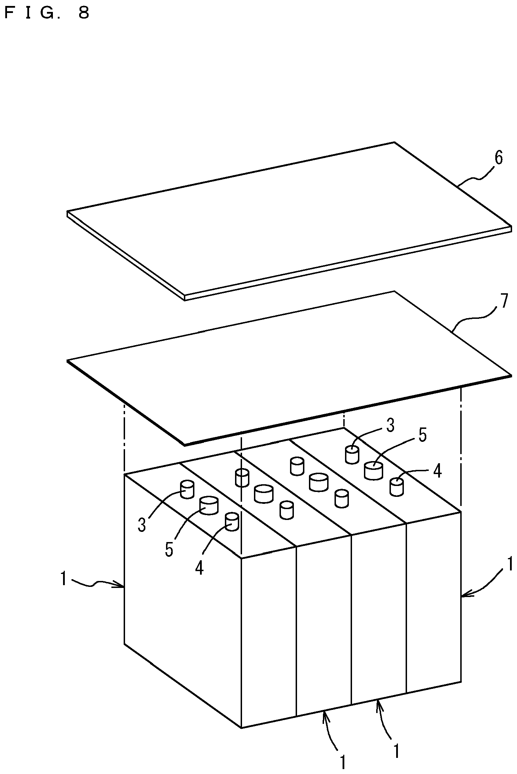

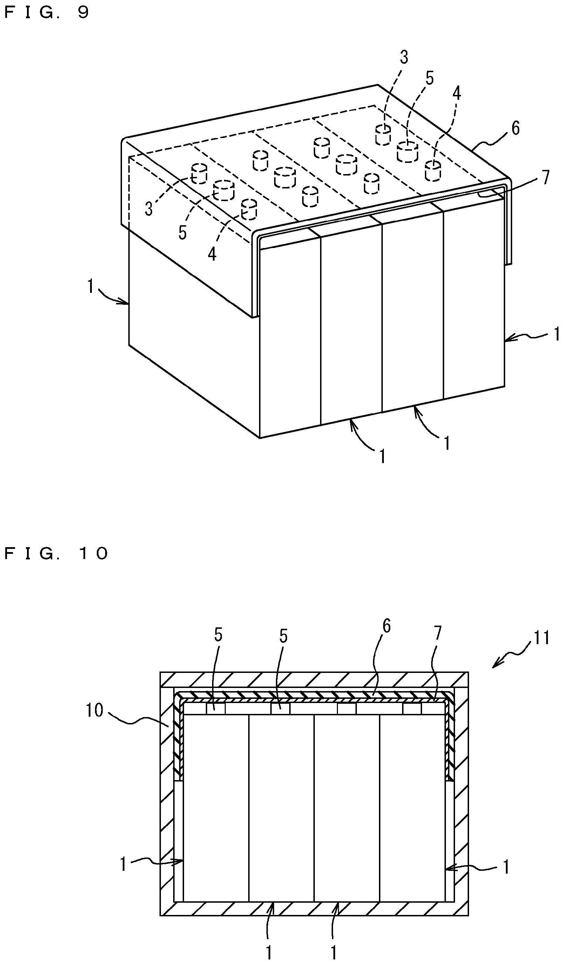

Figs. 8 and 9 illustrated correspondingly to Figs. 2 and 3 show a battery pack in which a plurality of lithium ion secondary battery cells; four lithium ion secondary battery cells as illustrated herein, are interconnected with a busbar (not illustrated in these drawings). The insulating sheet 7 and the sheet-like rubber molded body 6 may be attached to this battery pack in a manner that upper surfaces of the lithium ion secondary battery cells 1 and upper parts of front and back surfaces of the battery cells 1 located at lateral ends are covered with these sheet and molded body.

A battery pack 11 illustrated in Fig. 10 includes: these four lithium ion secondary battery cells 1 to which the insulating sheet 7 and the rubber molded body 6 are attached; and an exterior case containing these battery cells, for example, a resin-made exterior case 10 illustrated in Fig. 10.

### OTHER EMBODIMENTS

In the embodiments described earlier, the rubber molded body is attached to the battery cell in a manner that the upper surface and upper parts of the front and back surfaces of the lithium ion secondary battery cell 1 are covered with the molded body. Instead, the rubber molded body may be allowed to cover substantially the whole surface, except a lead wirerouted part, of the lithium ion secondary battery cell 1. In this instance, the exterior case may be unnecessary.

In the embodiments described thus far, the rubber molded body is prepared in the form of a sheet. Instead, the rubber molded body may be formed in any other suitable shapes insofar as at least the safety valve of the lithium ion secondary battery cell can be covered. For example, the rubber molded body may be prepared in the form of a tape, or in the form of a cap so shaped that can be fitted onto the upper part of the lithium ion secondary battery cell.

In case the rubber molded body is prepared in the form of a tape, the tape-like rubber molded body may be wound around the lithium ion secondary battery cell so as to cover the safety valve, with ends of the molded body being securely bonded with the adhesive tape described earlier.

The tape-like rubber molded body may be spirally wound, with a 1/2-pitch overlap, around substantially the whole outer circumferential surface of the lithium ion secondary battery cell, and ends of the rubber molded body are then securely bonded with the adhesive tape.

An adhesive layer may be formed on one surface, in at least a part thereof, for example, at a peripheral edge of one surface of the rubber molded body and then used to securely bond the rubber molded body to the lithium ion secondary battery cell.

In the embodiments described earlier, the rubber molded body is attached to the outer circumference of the lithium ion secondary battery cell with the insulating sheet being interposed therebetween. In other embodiments, the insulating sheet may be dispensable.

The embodiments may be suitably combined. For example, the sheet-like rubber molded body 6, which covers the lithium ion secondary battery cell 1 with the putty-like composition 9 of Fig. 6 being interposed therebetween, may be securely bonded to the putty-like composition 9 with the adhesive tape 8 illustrated in Fig. 5.

The outer circumferential surfaces of the lithium ion secondary battery cells 1 illustrated in Figs. 8 to 10 may be covered at least in part with the putty-like composition 9 illustrated in Figs. 6 and 7. In this instance, intervals between adjacent ones of the lithium ion secondary battery cells 1 may be coated with the putty-like composition 9, or the intervals may be left exposed without any coating.

In the embodiments described thus far, the rubber molded body is attached to the lithium ion secondary battery cell in a manner that the safety valve of this battery cell is covered with the molded body. Otherwise, the exhaust hole of the battery cell, instead of the safety valve, may be coated with the rubber molded body.

While the present invention is applied to the angular lithium ion secondary battery cell in the embodiments described thus far, it should be understood that the present invention be applicable likewise to a cylindrical lithium ion secondary battery cell(s). It may be particularly preferable for the technology described herein to be applied to lithium ion secondary battery cells having large energy densities, for example, energy densities greater than or equal to 300 Wh/kg, or preferably energy densities greater than or equal to 400 Wh/kg.

### REFERENCE SIGNS LIST

- 1: lithium ion secondary battery cell
- 2: exterior can
- 3: positive electrode terminal
- 4: negative electrode terminal
- 5: safety valve
- 6: rubber molded body
- 7: insulating sheet
- 8: adhesive tape
- 9: putty-like composition
- 10: exterior case
- 11: battery pack

## Claims

1. A rubber molded body attachable to an outer circumference of one or more lithium ion secondary battery cells each comprising a safety valve or an exhaust hole in a manner that the safety valve or the exhaust hole is at least covered with the rubber molded body,
a thermal conductivity of the rubber molded body being less than 1.0 W/m·K according to measurement using a unidirectional heat flux stationary comparison method pursuant to JIS H7903: 2008 (measured at 33°C);
a portion of the rubber molded body that covers the safety valve or the exhaust hole having a thickness greater than or equal to 0.3 mm and less than or equal to 10.0 mm, and
a surface hardness of the rubber molded body being greater than or equal to 50 and less than or equal to 90 according to measurement using a type A durometer pursuant to JIS K6253.

2. A rubber molded body attachable to an outer circumference of one or more lithium ion secondary battery cells each comprising a safety valve or an exhaust hole in a manner that the safety valve or the exhaust hole is at least covered with the rubber molded body,
the rubber molded body being producible by molding and curing a silicone rubber composition comprising, relative to 100 parts by mass of organopolysiloxane, silica powder in an amount greater than or equal to 10 parts by mass and less than or equal to 100 parts by mass, layered silicates in an amount greater than or equal to 10 parts by mass and less than or equal to 50 parts by mass, titanium oxide in an amount greater than or equal to 0.5 parts by mass and less than or equal to 20 parts by mass, and a curing agent in an amount greater than or equal to 4.0 parts by mass and less than or equal to 14.0 parts by mass.

3. A rubber molded body attachable to an outer circumference of one or more lithium ion secondary battery cells each comprising a safety valve or an exhaust hole in a manner that the safety valve or the exhaust hole is at least covered with the rubber molded body,
the rubber molded body being producible by molding and curing a silicone rubber composition comprising, relative to 100 parts by mass of organopolysiloxane, silica powder in an amount greater than or equal to 10 parts by mass and less than or equal to 100 parts by mass, layered silicates in an amount greater than or equal to 10 parts by mass and less than or equal to 50 parts by mass, titanium oxide in an amount greater than or equal to 0.5 parts by mass and less than or equal to 20 parts by mass, and a curing agent in an amount greater than or equal to 4.0 parts by mass and less than or equal to 14.0 parts by mass,
a thermal conductivity of the rubber molded body being less than 1.0 W/m·K according to measurement using a unidirectional heat flux stationary comparison method pursuant to JIS H7903: 2008 (measured at 33°C);
a portion of the rubber molded body that covers the safety valve or the exhaust hole having a thickness greater than or equal to 0.3 mm and less than or equal to 10.0 mm, and
a surface hardness of the rubber molded body being greater than or equal to 50 and less than or equal to 90 according to measurement using a type A durometer pursuant to JIS K6253.

4. The rubber molded body according to claim 1, wherein
an elongation at break is greater than or equal to 80% and less than or equal to 500%.

5. The rubber molded body according to claim 2, wherein
an elongation at break is greater than or equal to 80% and less than or equal to 500%.

6. The rubber molded body according to claim 3, wherein
an elongation at break is greater than or equal to 80% and less than or equal to 500%.

7. The rubber molded body according to claims 1 to 6, wherein
the rubber molded body has a shape in the form of a sheet, a tape, or a cap.

8. A battery pack, comprising one or more lithium ion secondary battery cells in which the rubber molded body according to claims 1 to 7 is attached to an outer circumference thereof.

9. The battery pack according to claim 8, wherein an outer circumferential surface of the lithium ion secondary battery cell is at least partly coated with a composition prepared in the form of a putty and having thermal conductivity.
